# EUROPÄISCHE PATENTANMELDUNG

(11) **EP 2 399 724 A1**
(43) Veröffentlichungstag der Anmeldung: **28.12.2011**
(21) Anmeldenummer: 10166863.0
(22) Anmeldetag: 22.06.2010
(51) Int. Cl.: B29C 65/24, B65B 51/18, B29C 65/32

(54) **Versiegelungsvorrichtung einer Folie um eine Verpackung**

(71) Anmelder: Häussler & Sauter KG, D-88079 Kressbronn (DE)
(72) Erfinder: Urbanek, Heinz, 88079 Kressbronn (DE)
(74) Vertreter: Engelhardt & Engelhardt

(57) **Zusammenfassung**

Bei einer Versiegelungsvorrichtung (1), durch die eine Verpackung (2) mittels einer Folie (3), insbesondere einer Folie (3) aus Kunststoff, gasdicht verschließbar ist,
- bestehend aus einem Förderband (6), durch das die Verpackungen (2) durch die Siegelstrecke (VS) der Versiegelungsvorrichtung (1) transportiert sind,
- aus zwei gegenüberliegenden und voneinander beabstandeten Traggestellen (7), die die Siegelstrecke (VS) seitlich begrenzen,
- und aus mindestens einem Paar von Siegelwerkzeugen (8, 9), die an dem jeweiligen Traggestell (7) fluchtend zueinander befestigt sind, wobei durch die Siegelwerkzeuge (8, 9) die Siegeltemperatur und der Siegeldruck zeitlich begrenzt auf die Verpackung (2) und die diese umschließende Folie (3) einwirken, soll die Verpackung (2) und die diese einschließende Folie (3) reibungsfrei durch eine von der Versiegelungsvorrichtung (1) gebildete Versiegelungsstrecke (VS) geführt sein und gleichzeitig soll der Siegelanpressdruck und die Siegeltemperatur variabel einstellbar sein. Dies wird dadurch erreicht, dass an jedem Traggestell (7) zwei zueinander beabstandete Umlenkräder (11) vorgesehen sind, dass eines der Umlenkräder (11) mittels eines Motors (19) angetrieben ist, dass die Umlenkräder (11) mit dem Förderband (6) in kraft- oder formschlüssiger Wirkverbindung stehen, dass auf der Außenseite der Förderbänder (6) ein oder mehrere der Siegelwerkzeuge (8, 9) angeordnet ist bzw. sind und dass die Siegelwerkzeuge (8, 9) auf der der Siegelstrecke (VS) abgewandten Seite der Förderbänder (6) entlang einer Energieübertragungseinrichtung (21) zu deren Aufheizung bewegt sind.

## Beschreibung

Die Erfindung bezieht sich auf eine Versiegelungsvorrichtung, durch die eine Verpackung mittels einer Folie, insbesondere einer Folie aus Kunststoff, gasdicht verschließbar ist, bestehend aus einem Förderband, durch das die Verpackungen durch die Siegelstrecke der Versiegelungsvorrichtung transportiert sind, aus zwei gegenüberliegenden und voneinander beabstandeten Traggestellen, die die Siegelstrecke seitlich begrenzen, und aus mindestens einem Paar von Siegelwerkzeugen, die an dem jeweiligen Traggestell fluchtend zueinander befestigt sind, wobei durch die Siegelwerkzeuge die Siegeltemperatur und der Siegeldruck zeitlich begrenzt auf die Verpackung und die diese umschließende Folie einwirken.

Die bekannt gewordenen Versiegelungsvorrichtungen verschließen mit Hilfe von Druck und Temperatur Folien aus Kunststoff, durch die eine Verpackung aus Papier oder Kunststoff gasdicht verschlossen werden soll. Ein solches Versiegelungsverfahren ist als Heißsiegeln oder Verschweißen solcher Kunststoff-Folien bekannt. Derartige Versiegelungsvorrichtungen sind Verpackungsmaschinen zugeordnet, durch die die Verpackungen, in denen beispielsweise Medikamente, kosmetische Artikel, Lebensmittel, Zigaretten oder dergleichen, also Gegenstände, die aufgrund von Luft- und Wasserberührungen oxidieren bzw. zerstört werden können, gasdicht verschlossen werden sollen, um deren Originalzustand über einen möglichst langen Zeitraum zu erhalten.

Die Verpackungsmaschinen falten die Bahnen von Kunststoff-Folie in einem bestimmten Prozess, so dass die Kunststoff-Folie die Verpackung bereits teilweise umschließt, wenn diese die Versiegelungsvorrichtung erreicht; lediglich auf den beiden gegenüberliegenden Stirnseiten der Verpackung sind die Folien noch nicht miteinander verbunden.

An den Stirnseiten der Verpackungen entstehen beim Umfalten der Folie Radien und somit sind Lufteinschlüsse vorhanden. Die Folien liegen in diesem Bereich mehrlagig übereinander, so dass die Folienschichten derart zusammen zu pressen sind, dass die Folienlagen möglichst ohne Lufteinschlüsse aufeinander anliegen und Lufteinschlüsse vermieden sind.

Darüber hinaus soll durch die Versiegelungsvorrichtung die Folie, die oftmals mehrlagig übereinanderliegt, im Bereich der Stirnseiten der Verpackungen miteinander verschweißt werden. Durch die Heißsiegelnaht bzw. die Schweißnaht soll zum Einen die Folie in diesem Bereich fest miteinander verbunden und zum Anderen soll tatsächlich keinerlei Gas- oder Wassereintritt durch die Siegelnähte möglich sein.

Bei den den Stand der Technik bildenden Versiegelungsvorrichtungen werden daher zwei gegenüberliegende beheizte Siegelbacken oder Siegelwerkzeuge verwendet, die in einem bestimmten Abstand voneinander, der an die Größe der Verpackung angepasst ist, ausgerichtet sind. Zwischen diesen gegenüberliegenden Siegelbacken wird die Verpackung und die auf dieser angeordneten Folie mittels des Förderbandes hindurchgedrückt. Somit entsteht nachteiligerweise Reibung zwischen der Außenseite der Siegelbacken und der Folie. Dies führt oftmals dazu, dass die Folie aufgrund der vorherrschenden Reibung reißt und daher die Verpackung nicht zuverlässig gasdicht verschließt. Auch die Verpackung selbst kann aufgrund der vorherrschenden Reibung beschädigt werden.

Darüber hinaus ist nachteilig, dass die Einwirkungszeit der Siegelwerkzeuge von der Fördergeschwindigkeit abhängt. Die zu versiegelnde Folie benötigt eine bestimmte Versiegelungstemperatur und einen vorgegebenen Versiegelungsdruck. Diese Parameter sind zeitabhängig. Die Einwirkungszeit dieser Parameter hängt wiederum von der Siegelstrecke bzw. der Stillstandszeit oder der Fördergeschwindigkeit der Verpackung und der diese umschließende Folie ab. Wenn daher der Siegeldruck, der von den Siegelwerkzeugen auf die Folie und die Verpackung ausgeübt ist, zu groß ist, wird die Verpackung und die Folie beschädigt und wenn der Siegeldruck zu gering ist, löst sich die Siegelnaht.

Wenn mehrere Paare von Siegelbacken hintereinander angeordnet sind und die Verpackung und die diese umschließende Folie den jeweiligen Paaren von Siegelwerkzeugen zugeführt ist, hat sich als äußerst nachteilig herausgestellt, dass der Siegelvorgang zwischen den jeweiligen Paaren von Siegelbacken unterbrochen ist, so dass dadurch die Güte der Siegelnaht erheblich reduziert ist. Die Siegelnaht kühlt ab, wenn für den Weitertransport der Verpackung die Siegelbacken auseinander bewegt sind, so dass keine zuverlässige Versiegelung, auch von mehreren Paaren von Siegelwerkzeugen, nicht erreicht werden kann. Zumal auch die Folie und die Verpackung zwischen den Paaren von Siegelwerkzeugen kurzzeitig druckentlastet sind, so dass durch die Unterbrechung des Versiegelungsvorganges Rückstellkräfte der Folie entstehen, durch die zum Einen die Faltung der Folie an den Stirnseiten der Verpackung zurückgestellt ist und zum Anderen die Siegelnaht nicht zuverlässig verschweißt ist.

Bei einer weiteren bekannten Versiegelung der Verpackung ist diese zwischen zwei gegenüberliegenden Transportbändern angeordnet, so dass die Siegeltemperatur und der Siegeldruck in einem bestimmten Zeitintervall beibehalten ist. Jedoch ist die Energie durch das Band zu leiten, denn das Band liegt unmittelbar an der Verpackung und der Folie an, durch das diese transportiert ist. Die Siegelbacken sind auf der gegenüberliegenden Seite der Anlagefläche zwischen dem Transportband und der Folie angebracht, so dass die von den Siegelbacken bzw. Siegelwerkzeugen abzugebende Temperatur bzw. Energie durch das Band hindurchzuleiten ist.

Diese Transportbänder sind aus dünnwandigem Stahlblech oder Teflon hergestellt, um die Reibung zwischen den Siegelwerkzeugen und dem Transportband möglichst gering zu halten. Durch die Siegelbacken / Siegelwerkzeuge werden jedoch Druckkräfte auf das Transportband und damit auf die Folie und die Verpackung übertragen. Wird nunmehr der Anpressdruck erhöht, steigt gleichzeitig die Reibung zwischen den Siegelwerkzeugen und dem relativ zu diesem bewegten Transportband. Dies kann nachteiligerweise dazu führen, dass die Reibung derart groß wird, dass das Transportband zwischen der Verpackung und den Siegelbacken zum Stillstand oder zu einer erheblichen Geschwindigkeitsreduzierung gebracht ist. Dies führt wiederum zu Beschädigungen an den Siegelnähten und der Verpackung; auch die Transportgeschwindigkeit ist reduziert, so dass der Ablauf der gesamten Verpackungsmaschine beeinträchtigt ist. Insbesondere können sich Staus bilden, die zu Maschinenstörungen führen.

Diese Transportbänder mit den dahinter angeordneten Siegelwerkzeugen können daher ausschließlich für niedrige Siegeldrücke verwendet sein. Auch ist die mechanische Beanspruchung, die auf das Transportband aufgrund der vorherrschenden Reibung einwirkt, derart hoch, dass das Transportband nach einer bestimmten Anzahl von Betriebsstunden auszuwechseln ist.

Es ist daher Aufgabe der Erfindung, eine Versiegelungsvorrichtung der eingangs genannten Gattung derart weiterzubilden, dass die Verpackung und die diese einschließende Folie reibungsfrei durch eine von der Versiegelungsvorrichtung gebildete Versiegelungsstrecke geführt ist und bei der gleichzeitig der Siegelanpressdruck und die Siegeltemperatur variabel einstellbar sind, ohne dass dabei eines der Bauteile der Versiegelungsvorrichtung einem Verschleiß aufgrund von Reibungskräften unterliegt oder die Folie, die Siegelnaht oder die Verpackung durch Reibung, den Siegeldruck oder die Siegeltemperatur beschädigt ist.

Diese Aufgabe ist erfindungsgemäß dadurch gelöst, dass an jedem Traggestell zwei zueinander beabstandete Umlenkräder vorgesehen sind, dass eines der Umlenkräder mittels eines Motors angetrieben ist, dass die Umlenkräder mit dem Förderband in kraft- oder formschlüssiger Wirkverbindung stehen, dass auf der Außenseite der Förderbänder ein oder mehrere der Siegelwerkzeuge angeordnet ist bzw. sind und dass die Siegelwerkzeuge auf der der Siegelstrecke abgewandten Seite der Förderbänder entlang einer Energieübertragungseinrichtung zu deren Aufheizung bewegt sind.

Weitere vorteilhafte Weiterbildungen der Erfindung ergeben sich aus den Unteransprüchen.

Dadurch, dass die beiden Förderbänder mittels den Umlenkrädern durch den Motor synchron angetrieben sind und dadurch, dass auf der Außenseite der Förderbänder die Siegelwerkzeuge angeordnet sind, können die Verpackungen und die diese umschließende Folie zwischen zwei zueinander fluchtend ausgerichteten und synchron umlaufenden Siegelwerkzeugen eingesetzt werden. Mittels den Siegelwerkzeugen wird daher sowohl der Transport der Verpackungen und der Folie durchgeführt als auch die Versiegelung an den entsprechenden Umschlagstellen der Folie an der Verpackung, denn die Siegelwerkzeuge üben einen bestimmten Siegeldruck auf die Verpackungen und die Folie aus, während dessen die Siegeltemperatur auf die Folie einwirkt.

Darüber hinaus ist es vorteilhaft, dass die Siegelwerkzeuge entlang einer Energieübertragungseinrichtung geführt sind, um diese aufzuheizen. Die von den Siegelwerkzeugen aufgenommene Energie in Form von Wärme, wird auf der der Energieübertragungseinrichtung gegenüberliegenden Seite unmittelbar auf die Folie zu deren Versiegelung übertragen. Aufgrund der Vorspannung der Siegelwerkzeuge durch die Anschlagleiste, die zwischen den beiden Umlenkrädern angeordnet ist, entsteht ein variabel einstellbarer Anpressdruck, durch den über die gesamte Versiegelungsstrecke ein konstanter Druck auf die Folie und die Siegelnaht der Folie ausgeübt ist. Die Temperatur, die von den Siegelwerkzeugen auf die Folie abgegeben ist, ist über die Versiegelungsstrecke nahezu konstant, eine Unterbrechung des Versiegelungsvorganges erfolgt nicht, so dass die Temperatur an der Siegelnaht während des Versiegelungsvorganges nicht auskühlt. Auch eine Druckentlastung der Folie entsteht nicht, denn die Siegelwerkzeuge spannen die Folie während des gesamten Versiegelungsvorganges ein und wenn dieser beendet ist, dann hat die Siegelnaht eine Festigkeit erreicht, durch die ein Aufweiten der Folie zuverlässig verhindert ist.

Aufgrund der konstruktiven Ausbildung der Versiegelungsvorrichtung entsteht zwischen der Folie, der Verpackung und den Siegelwerkzeugen keine Relativbewegung, also keine Reibungskräfte treten an dem Übergangsbereich auf, da die Siegelwerkzeuge, die Folie und die Verpackungen mit einer gleich großen Umlaufgeschwindigkeit bewegt sind.

Die auf die Siegelwerkzeuge zu übertragende Energie in Form von Wärme mittels der Energieübertragungseinrichtung kann sowohl berührungsfrei als auch unter Vorspannung erfolgen. Dies bewirkt, dass die Betriebsstandzeit der Versiegelungsvorrichtung erheblich erhöht ist, denn Verschleiß augrund von Reibung entsteht - wenn überhaupt - ausschließlich zwischen den Siegelwerkzeugen und der Energieübertragungseinrichtung. Isolierende und damit die Energieübertragung behindernde Bauteile, die zwischen den Siegelwerkzeugen und der Folie im Stand der Technik vorgesehen sind, werden nicht benötigt, so dass die Energieübertragung zwischen den Siegelwerkzeugen und der Folie unmittelbar durchführbar ist.

In der Zeichnung ist ein erfindungsgemäßes Ausführungsbeispiel dargestellt, das nachfolgend näher erläutert ist. Im Einzelnen zeigt:
- Figur 1a: eine Versiegelungsvorrichtung mit einem Traggestell, an dessen beiden Stirnseiten jeweils ein Förderband in Form eines Kettenantriebes zwischen zwei Umlenkrädern angeordnet ist und auf dessen Außenseite zwölf Siegelwerkzeuge befestigt sind, die an einer Energieübertragungseinrichtung aufgeheizt sind, in Draufsicht,
- Figur 1b: die Versiegelungsvorrichtung gemäß Figur 1a, im Schnitt,
- Figur 2a: die Versiegelungsvorrichtung gemäß Figur 1a, mit einer Zustelleinrichtung und in vertikaler Transportrichtung und
- Figur 2b: die Versiegelungsvorrichtung gemäß Figur 2a, mit einem Zuführband, das der Zustelleinrichtung zugeordnet ist.

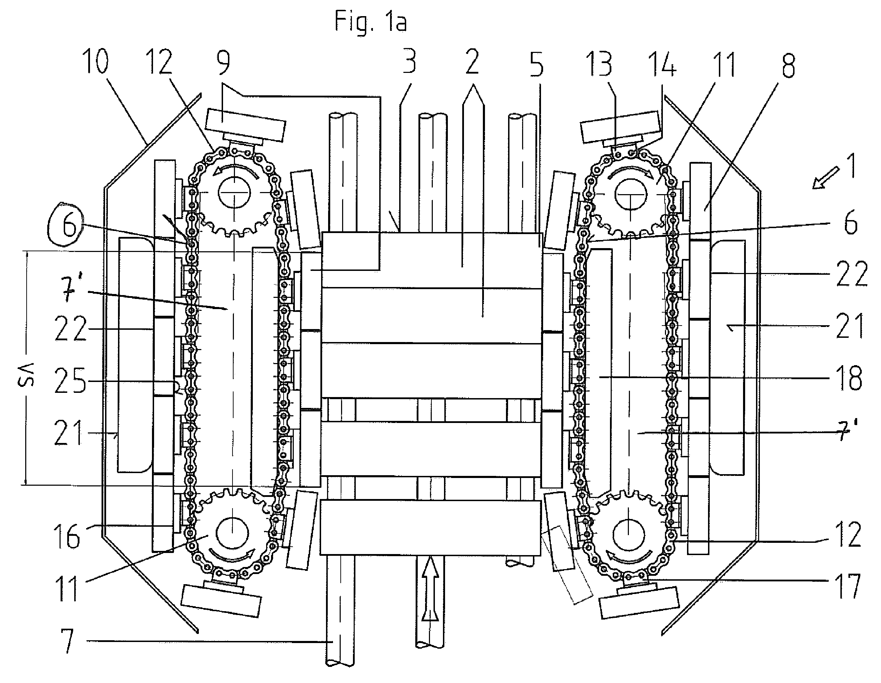

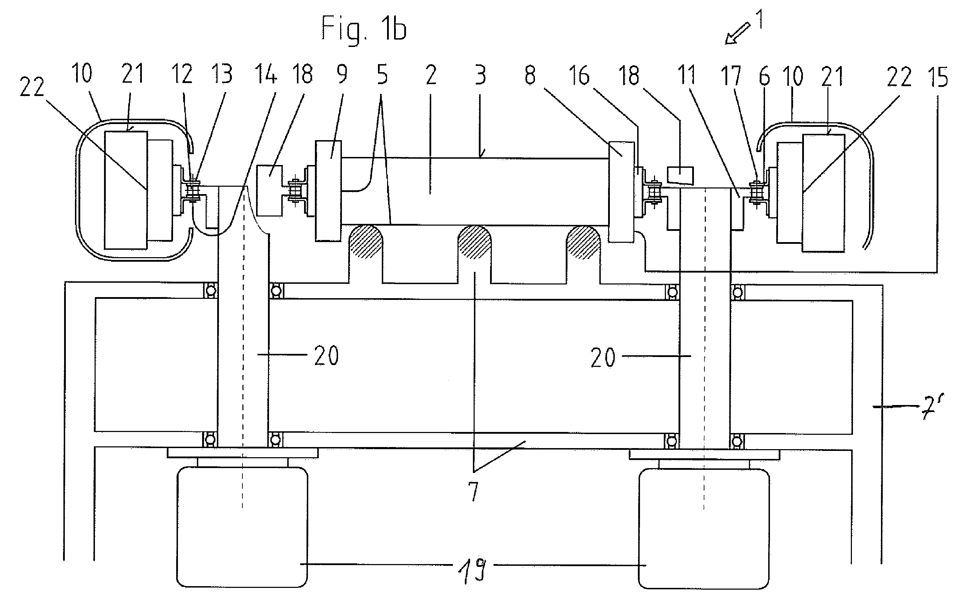

In den Figuren 1a bis 2b ist eine Versiegelungsvorrichtung 1 zu entnehmen, durch die eine Verpackung 2, die beispielsweise aus Papier, Kunststoff oder Pappe hergestellt ist, mit einer Folie 3, insbesondere einer Folie 3 aus Kunststoff, gasdicht zu verschließen ist. In der Verpackung 2 sind beispielsweise Lebensmittel, kosmetische Artikel, Zigaretten, Medikamente oder dergleichen angeordnet, an die während der Lagerungszeit kein Wasser und keine Luft gelangen darf, da ansonsten die eingelagerten Gegenstände unbrauchbar werden bzw. der Originalzustand dieses Artikel verloren geht.

Das Material der Folie 3 ist derart ausgewählt, dass dieses mittels einer bestimmten Siegeltemperatur und eines Siegeldruckes im Bereich der Stirnseiten der Verpackung 2 verschweißt oder heißversiegelt ist. Die dadurch entstehende Siegelnaht ist mit der Bezugsziffer 4 versehen. Darüber hinaus sollen, insbesondere durch den Siegeldruck, die Faltkanten 5 des mehrschichtigen Folienaufbaues im Bereich der Stirnseite der Verpackung 2 möglichst ohne Lufteinschlüsse aneinander anliegend angepresst werden.

Die Versiegelungsvorrichtung 1 besteht aus einem Traggestell 7, an dem zwei Tragarme 7' seitlich zueinander beabstandet sind. An den Tragarmen 7' sind jeweils zwei Umlenkräder 11 drehbar angebracht. Eines der jeweiligen Umlenkräder 11 ist mittels eines Motors 19 über eine Antriebswelle 20 in Rotation versetzt. Zwischen den Umlenkrädern 11 ist ein Förderband 6 vorgesehen, das vorzugsweise aus einer Vielzahl von Kettengliedern 12 besteht. Das Förderband 6 kann auch als Zahnriementrieb ausgestaltet sein. Folglich stehen die Umlenkräder 11 in kraft- bzw. formschlüssiger Wirkverbindung mit dem Förderband 6.

Auf der Außenseite des Förderbandes 6 sind jeweils paarweise zusammenwirkende Siegelwerkzeuge 8 und 9 angebracht. Jedes der Siegelwerkzeuge 8, 9 ist mittels einer Tragplatte 13 an einem der Kettenglieder 12 über einen Stift 14 fest mit dem Förderband 6 verbunden, so dass die Rotationsgeschwindigkeit des Förderbandes 6 der Umlaufgeschwindigkeit der einzelnen Siegelwerkzeuge 8 und 9 entspricht.

Die Siegelwerkzeuge 8 und 9 sind demnach kraft- oder formschlüssig über das Förderband 6 mit den Umlenkrädern 11 verbunden. Es ist auch denkbar, den Abstand zwischen zwei benachbarten Siegelwerkzeugen 8 oder 9 des jeweiligen Förderbandes derart gering zu bemessen, dass die Verpackungen 2 völlig unabhängig von der Position der Siegelwerkzeuge 8, 9 in die Versiegelungsstrecke VS eingeschoben sind. Die entstehende Siegelnaht 4 ist gleichwohl durchgehend ausgebildet.

Zwischen den beiden Umlenkrädern 11 der jeweiligen Förderbänder 6 ist eine Anschlagleiste 18 vorgesehen, durch die eine Vorspannung auf das Förderband 6 und damit auf die einzelnen Siegelwerkzeuge 8 oder 9 ausgeübt ist, durch die diese in Richtung auf die zu verschweißende Verpackung 2 gedrückt sind. Die Anschlagleiste 18 bildet dabei eine Siegelstrecke VS, innerhalb der die Folie 3 verschweißt ist, so dass die Siegelnähte 4 entstehen. Die paarweise zusammenwirkenden Siegelwerkzeuge 8 und 9 sind dabei derart positioniert, dass zwei gegenüberliegende Siegelwerkzeuge 8 und 9 exakt fluchtend zueinander ausgerichtet sind und die Verpackungen 2 werden derart in die Versiegelungsstrecke VS eingeführt, dass diese exakt zwischen einem der Paare der Siegelwerkzeuge 8 und 9 angeordnet sind.

Durch die Umlaufgeschwindigkeit der Siegelwerkzeuge 8 und 9 sind die Verpackungen 2 durch die Versiegelungsstrecke VS transportierbar; demnach entsteht keine Relativbewegung zwischen den Siegelwerkzeugen 8 und 9 und der Verpackung 2 bzw. der Folie 3.

Die Siegelwerkzeuge 8 und 9 sind als Siegelsegmente ausgestaltet, die eine auf die Verpackung 2 ausgerichtete Versiegelungsfläche aufweisen. Die Größe der Siegelwerkzeuge 8 und 9 ist an die Teilung der Kettenglieder 12 derart angepasst, dass die Außenseite der Siegelwerkzeuge 8 und 9 exakt fluchtend zu dem Übergangsbereich von zwei benachbarten Kettengliedern 12 verläuft. Es ist besonders vorteilhaft, wenn zwei der Kettenglieder 12 zwischen zwei Kettengliedern 12 angeordnet sind, an denen die Siegelwerkzeuge 8 oder 9 mittels der Tragplatte 13 und des Stiftes 14 befestigt sind.

Im Bereich der Versiegelungsstrecke VS liegen die Außenseiten der Siegelwerkzeuge 8 und 9 an den Außenseiten der benachbarten Siegelwerkzeuge 8, 9 plan an, so dass zwischen diesen kein Luftspalt gebildet ist. Somit ist innerhalb der Versiegelungsstrecke VS auf beiden Seiten der Verpackungen 2 eine homogene durchgehende Versiegelungsfläche geschaffen.

Die Umlenkung der Siegelwerkzeuge 8 und 9 im Bereich der jeweiligen Umlenkräder 11 ist völlig unproblematisch, da der Außendurchmesser, den die Siegelwerkzeuge 8 und 9 zurücklegen, größer bemessen ist als der Weg, den die einzelnen Kettenglieder 12 im Bereich der Umlenkräder 11 durchlaufen. Somit sind in diesem Bereich der Umlenkräder 11 die Siegelwerkzeuge 8 und 9 voneinander beabstandet und werden im Bereich der Versiegelungsstrecke VS wiederum aneinander anliegen.

Zur Aufheizung der Siegelwerkzeuge 8 und 9 ist eine Energieübertragungseinrichtung 21 vorgesehen, die auf der der Versiegelungsstrecke VS abgewandten Seite seitlich benachbart zu dem Förderband 6 positioniert ist.

Die Energieübertragungseinrichtung 21 ist als ebene Heizplatte 22 ausgestaltet, die Wärme abgibt. Die Siegelwerkzeuge 8 und 9 werden mittels des Förderbandes 6 parallel entlang der Energieübertragungseinrichtung 21 und damit der Heizplatte 22 verfahren, so dass diese entweder berührungsfrei durch das von der Heizplatte 22 abgestrahlte Wärmefeld oder unter Vorspannung auf dieses aufgepresst sind, so dass die einzelnen Siegelwerkzeuge 8 und 9 im Bereich der Energieübertragungseinrichtung 21 aufgeheizt sind.

Die Siegelwerkzeuge 8 und 9 bestehen aus einem keramischen oder metallischen Werkstoff, der hoch wärmeleitfähig ist, die von der Energieübertragungseinrichtung 21 abgegebene Wärme optimal speichert und der druckbelastbar ist. Zur Kapselung der Energieübertragungseinrichtung 21 ist dieses in einem Gehäuse 10 eingebaut, so dass das Wärmefeld zuverlässig in den Bereich, den die Siegelwerkzeuge 8 und 9 durchlaufen, eingestrahlt ist; gleichzeitig dient das Gehäuse 10 als Berührungsschutz, so dass die Wärmestrahlung und die sich bewegenden Bauteile von außen nicht zugänglich sind.

Die Energieübertragungseinrichtung 21 kann auch derart ausgestaltet sein, dass die Siegelwerkzeuge 8 und 9 mittels Induktion, Mikrowellen oder sonstiger Wärmestrahlung berührungsfrei aufgeheizt sind, wenn diese im Bereich der Energieübertragungseinrichtung 21 bewegt sind.

Die Siegelwerkzeuge 8 und 9 sind mit einem nicht dargestellten Temperatursensor versehen, durch den die aufgenommene Temperatur messbar ist. Sollte die Temperatur der einzelnen Siegelwerkzeuge 8 und 9 einen vorgegebenen Grenzwert unter- oder übersteigen, kann dies von dem Temperatursensor festgestellt und ein entsprechendes elektrisches Signal an eine nicht dargestellte Steuerelektronik weitergegeben werden, durch die die Temperatur an der Energieübertragungseinrichtung 21 abgesenkt oder gegebenenfalls angehoben ist.

Darüber hinaus sind die beiden Tragarme 7' des Traggestells 7 in ihrem Abstand zueinander variabel einstellbar, so dass diese an die Verpackungsgröße anpassbar ist. Durch die Ausrichtung der Anschlagleisten 18 kann ein definierter Siegelanpressdruck eingestellt werden, so dass über eine vorgegebene Versiegelungszeit ein bestimmter Siegeldruck und eine bestimmte Siegeltemperatur auf die Folie 3 einwirkt.

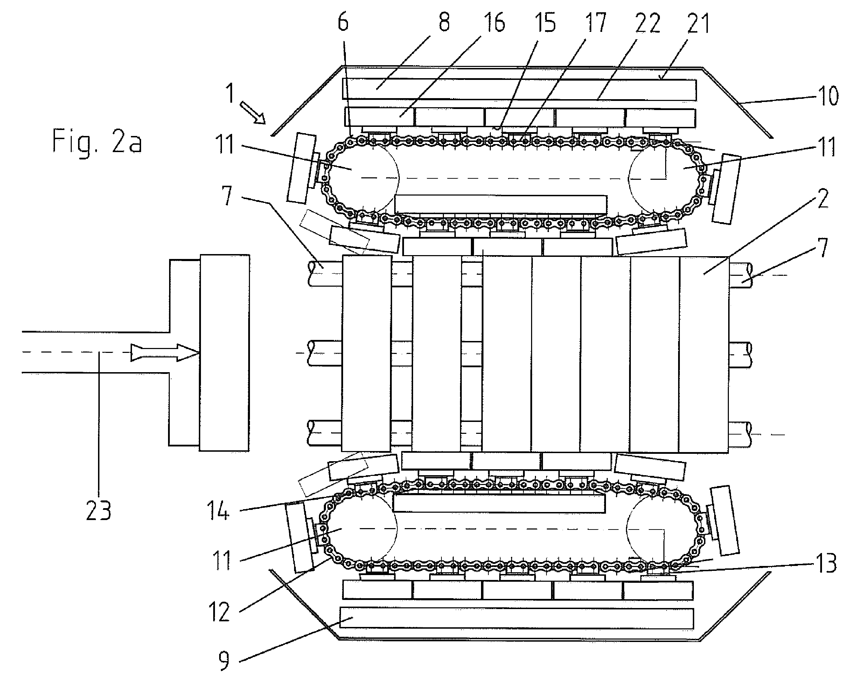

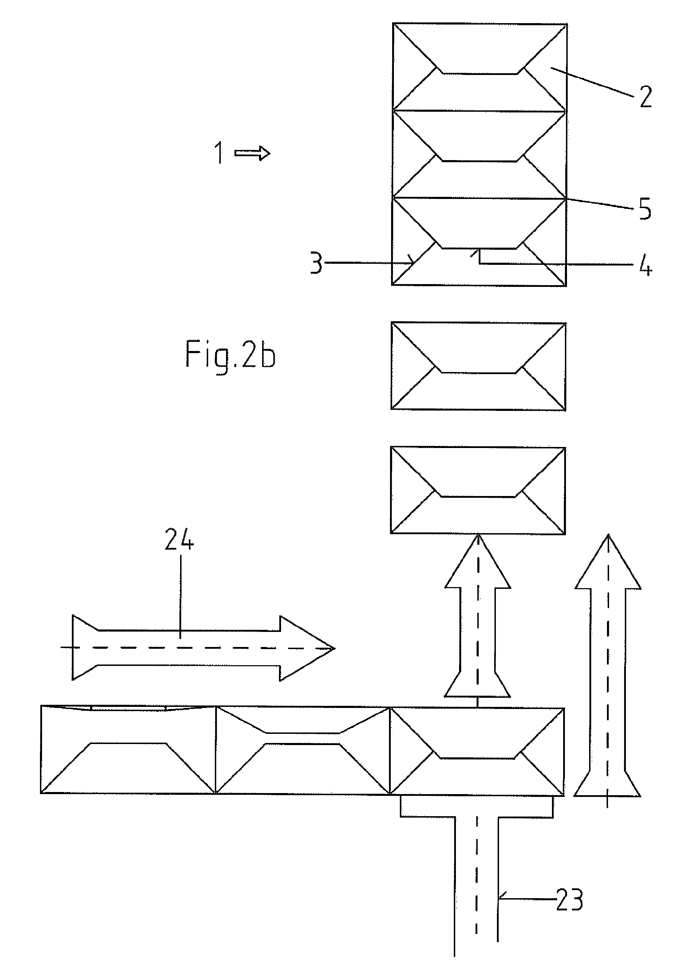

Insbesondere den Figuren 2a und 2b ist zu entnehmen, dass die Versiegelungsvorrichtung 1 in vertikaler Richtung ausgerichtet sein kann. Um die Verpackungen 2 an die Versiegelungsvorrichtung 1 zuzuführen ist ein Zuführband 24 und eine Zustelleinrichtung 23 vorzusehen, die schematisch dargestellt sind. Die Verpackungen 2 liegen auf dem Zuführband 24 auf und werden von der als Kolben ausgestalteten Zustelleinrichtung 23 in die Versiegelungsstrecke VS der Versiegelungsvorrichtung 1 eingeschoben. Sobald die Verpackungen 2 die Versiegelungsstrecke VS durchlaufen haben, werden diese von einer Entnahmeeinrichtung übernommen und dem weiteren Verpackungstransportweg zugeführt.

Die Taktfrequenz der Zustelleinrichtung 23 ist mit der Geschwindigkeit des Förderbandes 6 synchronisiert.

## Patentansprüche

1. Versiegelungsvorrichtung (1), durch die eine Verpackung (2) mittels einer Folie (3), insbesondere einer Folie (3) aus Kunststoff, gasdicht verschließbar ist,
- bestehend aus einem Förderband (6), durch das die Verpackungen (2) durch die Siegelstrecke (VS) der Versiegelungsvorrichtung (1) transportiert sind,
- aus zwei gegenüberliegenden und voneinander beabstandeten Traggestellen (7), die die Siegelstrecke (VS) seitlich begrenzen,
- und aus mindestens einem Paar von Siegelwerkzeugen (8, 9), die an dem jeweiligen Traggestell (7) fluchtend zueinander befestigt sind, wobei durch die Siegelwerkzeuge (8, 9) die Siegeltemperatur und der Siegeldruck zeitlich begrenzt auf die Verpackung (2) und die diese umschließende Folie (3) einwirken,
**dadurch gekennzeichnet,**
**dass** an jedem Traggestell (7) zwei zueinander beabstandete Umlenkräder (11) vorgesehen sind, dass eines der Umlenkräder (11) mittels eines Motors (19) angetrieben ist, dass die Umlenkräder (11) mit dem Förderband (6) in kraft- oder formschlüssiger Wirkverbindung stehen, dass auf der Außenseite der Förderbänder (6) ein oder mehrere der Siegelwerkzeuge (8, 9) angeordnet ist bzw. sind und dass die Siegelwerkzeuge (8, 9) auf der der Siegelstrecke (VS) abgewandten Seite der Förderbänder (6) entlang einer Energieübertragungseinrichtung (21) zu deren Aufheizung bewegt sind.

2. Versiegelungsvorrichtung nach Anspruch 1,
**dadurch gekennzeichnet,**
**dass** die Energieübertragungseinrichtung (21) als Heizplatte (22) ausgebildet ist und dass die Siegelwerkzeuge (8, 9) beabstandet zu der Heizplatte (22) verlaufen oder unter Vorspannung stehend auf dieser anliegen.

3. Versiegelungsvorrichtung nach Anspruch 1,
**dadurch gekennzeichnet,**
**dass** die Siegelwerkzeuge (8, 9) durch die Energieübertragungseinrichtung (21) mittels Induktion, Wärmestrahlung oder Mikrowellen berührungsfrei aufheizbar sind.

4. Versiegelungsvorrichtung nach einem der vorgenannten Ansprüche,
**dadurch gekennzeichnet,**
**dass** zwischen den beiden Umlenkrädern (11) seitlich benachbart zu der Versiegelungsstrecke (VS) eine Anschlagsleiste (18) vorgesehen ist, durch die das Förderband (6) in Richtung auf die Verpackung (2) und die diese umschließende Folie (3) unter Vorspannung gehalten ist.

5. Versiegelungsvorrichtung nach einem der vorgenannten Ansprüche,
**dadurch gekennzeichnet,**
**dass** das jeweilige Förderband (6) als Kette ausgebildet ist und aus einer Vielzahl von miteinander verbundenen Kettengliedern (12) besteht.

6. Versiegelungsvorrichtung nach Anspruch 5,
**dadurch gekennzeichnet,**
**dass** die Flächengröße der einzelnen Siegelwerkzeuge (8, 9) an die Teilung der Kettenglieder (12) derart angepasst ist, dass zwischen zwei benachbarten Siegelwerkzeugen (8, 9) im Bereich der Versiegelungsstrecke (VS) eine durchgehende gemeinsame Fläche von mindestens zwei der aneinander anliegenden Siegelwerkzeugen (8, 9) geschaffen ist.

7. Versiegelungsvorrichtung nach Anspruch 6,
**dadurch gekennzeichnet,**
**dass** an einem der Kettenglieder (12) eines der Siegelwerkzeuge (8, 9) angeordnet ist und dass die Breite des Siegelwerkzeuges (8, 9) innerhalb der Versiegelungsstrecke (VS) fluchtend zu dem Übergangsbereich von zwei Kettengliedern (12), ausgerichtet ist.

8. Versiegelungsvorrichtung nach einem der vorgenannten Ansprüche,
**dadurch gekennzeichnet,**
**dass** die Geschwindigkeit des Förderbandes (6) mit der Geschwindigkeit einer Zustelleinrichtung (23) synchronisiert ist.

9. Versiegelungsvorrichtung nach einem der vorgenannten Ansprüche,
**dadurch gekennzeichnet,**
**dass** der Abstand der beiden Traggestelle (7) zueinander variabel einstellbar und auf die Größe der jeweiligen Verpackung (2) anpassbar ist.

10. Versiegelungsvorrichtung nach einem der vorgenannten Ansprüche,
**dadurch gekennzeichnet,**
**dass** die Förderbänder (6) horizontal, vertikal oder in einer schiefen Ebene verlaufend ausgerichtet sind.

11. Versiegelungsvorrichtung nach einem der vorgenannten Ansprüche,
**dadurch gekennzeichnet,**
**dass** auf der dem Förderband (6) zugewandten Unterseite (15) des jeweiligen Siegelwerkzeuges (8, 9) eine Wärmeisolierungsfofie (16) angeordnet ist.

12. Versiegelungsvorrichtung nach einem der vorgenannten Ansprüche,
**dadurch gekennzeichnet,**
**dass** die Siegelwerkzeuge (8, 9) als flächige Siegelsegmente ausgebildet sind und dass die Siegelsegmente aus einem Werkstoff, vorzugsweise aus Keramik oder Metall, gefertigt sind, der druckbelastbar und hoch wärmeleitfähig ist.

13. Versiegelungsvorrichtung nach einem der vorgenannten Ansprüche,
**dadurch gekennzeichnet,**
**dass** jedem Siegelwerkzeug (8, 9) ein Temperatursensor zugeordnet ist oder dass die Siegelwerkzeuge (8, 9) nach dem Passieren der Energieübertragungseinrichtung (21) entlang eines Temperatursensors geführt sind, durch den die auf die Folie (3) einwirkende Temperatur messbar ist und dass jeder der Temperatursensoren einer elektrischen Auswerteeinheit zugeordnet ist, durch die die Temperatur der Energieübertragungseinrichtung (21) in Abhängigkeit von der auf die Folie (3) einwirkende Temperatur einstellbar ist.
